# EUROPÄISCHE PATENTANMELDUNG

(11) **EP 1 113 610 A2**
(43) Veröffentlichungstag der Anmeldung: **04.07.2001**
(21) Anmeldenummer: 00125200.6
(22) Anmeldetag: 18.11.2000
(51) Int. Cl.: H04H 1/02, H04N 7/10

(54) **Antennensteckdose mit ferngesteuerten schaltbaren Filtern zum selektiven Empfang von über ein Kabelfernsehverteilnetz übertragenen Rundfunksignalen**

(30) Priorität: 25.11.1999 DE 19956679
(71) Anmelder: Grundig AG, 90471 Nürnberg (DE)
(72) Erfinder: Kamm, Jürgen, 90579 Langenzenn (DE)

(57) **Zusammenfassung**

Die Erfindung betrifft eine Antennendose, welche einen Eingang für über ein Antennenkabel in einer Vielzahl von unterschiedlichen Frequenzkanälen übertragene Rundfunksignale aufweist. Weiterhin sind in der Antennendose mehrere parallel zueinander angeordnete Filter enthalten, die unterschiedliche Durchlaßbereiche haben und selektiv zu- und abschaltbar sind. Die Ausgänge der Filter sind mit einem gemeinsamen Ausgangsanschluß der Antennendose verbunden.

## Beschreibung

Die Erfindung betrifft eine Antennendose, welche einen Eingang für über ein Antennenkabel in einer Vielzahl von unterschiedlichen Frequenzkanälen übertragene Rundfunksignale aufweist.

Es ist bekannt, einem Endverbraucher an einer Antennensteckdose in einer Vielzahl von unterschiedlichen Frequenzkanälen übertragene Rundfunksignale zur Verfügung zu stellen. Bekannte Antennensteckdosen weisen einen ersten Ausgangsanschluß für Fernsehsignale und einen zweiten Ausgangsanschluß für Hörrundfunksignale auf. Von dort aus werden die Rundfunksignale an Rundfunkempfangsgeräte weitergeleitet, mittels derer jeweils ein gewünschtes Signal ausgewählt und wiedergegeben werden kann.

Im Zusammenhang mit in Wohnblocks oder Hotelanlagen aufgestellten Rundfunkempfangsgeräten ist es bereits bekannt, Rundfunksignale mittels einer Kopfstation aufzubereiten und in Antennenkabel einzuspeisen, die zu den einzelnen Wohneinheiten bzw. Zimmern führen.

Ferner ist es bereits bekannt, gebührenpflichtige Fernseh- und/oder Hörrundfunksendungen auszustrahlen, die nur für Benutzer empfangbar bzw. decodierbar sein sollen, die ein entsprechendes Entgelt entrichtet haben.

Ausgehend von diesem Stand der Technik liegt der Erfindung die Aufgabe zugrunde, einen neuen Weg zum selektiven Empfang von über ein Antennenkabel übertragenen Rundfunksignalen aufzuzeigen.

Diese Aufgabe wird durch Verwendung einer Antennendose mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, daß zur Realisierung eines selektiven Empfangs von Rundfunksignalen keinerlei Umbaumaßnahmen an einer bereits vorhandenen Antennenverkabelung innerhalb des jeweiligen Gebäudes vorgenommen werden müssen. Es ist lediglich notwendig, eine bereits vorhandene Antennensteckdose durch eine Antennendose gemäß der Erfindung zu ersetzen oder im Falle eines Neubaus eine Antennendose gemäß der Erfindung einzusetzen.

Sind die in der Antennendose angeordneten Filter mittels einer Steuereinheit aktivier- und deaktivierbar, dann ist es auf einfache Weise möglich, die Selektivität der Antennendose für die unterschiedlichen Frequenzkanäle schnell zu ändern. Dies erlaubt es beispielsweise, ohne großen Aufwand bestimmte Frequenzkanäle für definierte Zeiträume freizuschalten oder zu sperren.

Weist die Antennendose einen Speicher für ein der Antennendose individuell zugeordnetes Kennsignal auf, dann besteht die Möglichkeit, von der Kopfstation aus zu überprüfen, ob die jeweilige Antennendose nach wie vor in Betrieb ist oder nicht. Erfolgt auf eine entsprechende Anfrage der Kopfstation keine korrekte Rückmeldung mit dem jeweiligen Kennsignal, dann erkennt die Kopfstation das Vorliegen einer unerlaubten Manipulation auf der Seite des Endverbrauchers und gibt eine zugehörige Meldung aus. Auf Grund dieser Meldung kann der Betreiber der Kopfstation geeignete Gegenmaßnahmen in die Wege leiten.

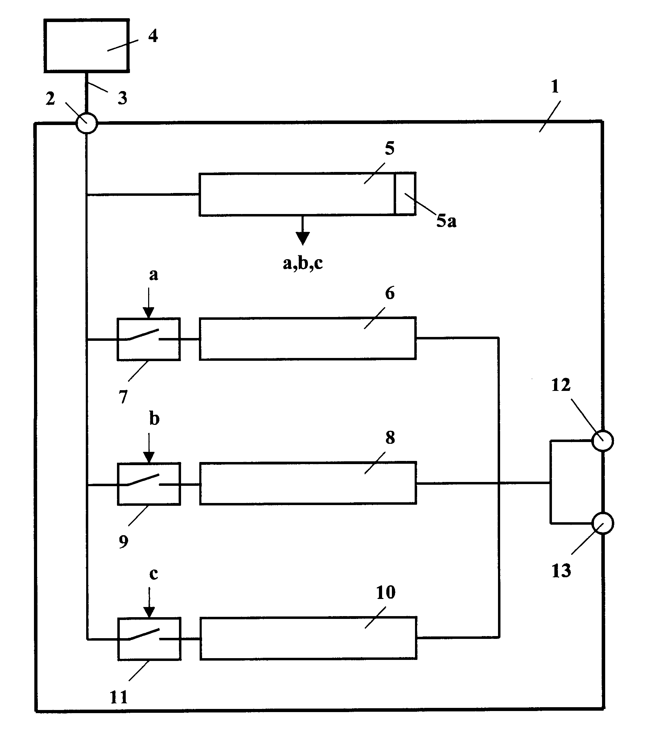

Weitere vorteilhafte Eigenschaften der Erfindung ergeben sich aus der Erläuterung eines Ausführungsbeispiels anhand der Figur.

Diese zeigt eine Antennendose 1, die über ein Antennenkabel 3 an eine Kopfstation 4 angeschlossen ist.

Die Kopfstation 4 ist auf dem Dachboden eines größeren Wohnblocks oder einer Hotelanlage angeordnet. Sie stellt an ihrem Ausgang Rundfunksignale bereit, die in einer Vielzahl von unterschiedlichen Frequenzkanälen vorliegen und insgesamt in einem Frequenzbereich von 48 MHz bis 860 MHz angesiedelt sind. Die genannten Frequenzkanäle können unterschiedliche Bandbreiten aufweisen und zur Übertragung analoger oder digitaler Femseh- und/oder Hörrundfunksignale vorgesehen sein. Beispielsweise sei angenommen, daß Rundfunksignale, die im Frequenzbereich zwischen 48 MHz und 480 MHz liegen, frei für alle Benutzer zugänglich sein sollen, daß Rundfunksignale, die im Frequenzbereich von 480 MHz bis 720 MHz liegen, nur für eine erste Benutzergruppe zugänglich sein sollen, die für die zugehörige Empfangsberechtigung bezahlt hat, und daß Rundfunksignale, die im Frequenzbereich von 720 MHz bis 860 MHz liegen, nur für eine zweite Benutzergruppe zugänglich sein sollen, die für diese Empfangsberechtigung bezahlt hat.

In der Kopfstation 4 sind für jeden angeschlossen Endverbraucher das diesem zugehörige Kennsignal der Antennendose, bei welchem es sich um eine Seriennummer handeln kann, sowie die zugehörigen Empfangsberechtigungen registriert. Diese Daten werden in Form eines Protokolls als digitale Steuerdaten zusammen mit den Rundfunksignalen über das Antennenkabel 3 an die Endverbraucher bzw. deren Antennendosen 1 übertragen. Für die Übertragung der Steuerdaten wird vorzugsweise ein Frequenzbereich verwendet, der knapp unterhalb von 48 MHz liegt.

In der Antennendose 1 gelangen die empfangenen Signale vom Eingang 2 an eine Steuereinheit 5, die in Form eines Mikrocomputers realisiert ist. Dieser weist einen Speicher 5a auf, in welchem das der Antennendose zugehörige individuelle Kennsignal abgespeichert ist. Der Mikrocomputer 5 wertet die über das Antennenkabel 3 angelieferten Steuerdaten aus, die Informationen über die der Antennendose zugehörigen Empfangsberechtigungen enthalten, und erzeugt an seinem Ausgang Steuersignale a, b und c für die Schalter 7, 9 und 11.

Diese Schalter sind jeweils in Reihe zu einem Filter 6, 8 bzw. 10 vorgesehen, wobei diese Filter parallel zueinander angeordnet sind. Mittels der genannten Schalter sind die Filter in Abhängigkeit vom jeweiligen Steuersignal einzeln zu- und abschaltbar.

Beim vorliegenden Ausführungsbeispiel ist das Filter 6 für Signale im Frequenzbereich von 48 MHz bis 480 MHz durchlässig und sperrt alle anderen Signale, die außerhalb dieses Frequenzbereiches liegen. Das Filter 8 ist für Signale im Frequenzbereich von 480 MHz bis 720 MHz durchlässig und sperrt alle anderen Signale. Das Filter 10 ist für Signale im Frequenzbereich von 720 MHz bis 860 MHZ durchlässig und sperrt alle anderen Signale.

Durch eine geeignete Steuerung der Schalter 7, 9 und 11 können die genannten Filter einzeln zu- und abgeschaltet werden.

Hat der Endverbraucher die Berechtigung, sämtliche Signale empfangen zu können, dann erzeugt die Steuereinheit 5 die Steuersignale für die Schalter 7, 9 und 11 derart, daß die Schalter geschlossen sind. Dies entspricht einer Zuschaltung bzw. Aktivierung der Filter 6, 8 und 10, die an ihrem Ausgang jeweils die oben genannten Signale zur Verfügung stellen. Diese werden am Ausgang der Filter wieder zu einem einzigen Signal zusammengefaßt und an einem gemeinsamen Ausgangsanschluß der Antennendose 1 bereitgestellt, wobei dieser gemeinsame Ausgangsanschluß ein Fernsehsignal-Ausgangsanschluß 12 und/oder ein Hörrundfunksignal-Ausgangsanschluß 13 sein kann.

Hat der Endverbraucher hingegen lediglich die Berechtigung, die im Frequenzbereich von 48 MHz bis 480 MHz liegenden, frei zugänglichen Rundfunksignale zu empfangen, dann erzeugt die Steuereinheit 5 die Steuersignale für die Schalter 7, 9 und 11 derart, daß der Schalter 7 geschlossen und die Schalter 9 und 11 geöffnet sind. Folglich ist lediglich das Filter 6 aktiviert, welches für die im Frequenzbereich von 48 MHz bis 480 MHz liegenden Rundfunksignale durchlässig ist. Die in diesem Frequenzbereich liegenden Signale werden folglich auch am Ausgang 12 bzw. 13 der Antennendose zur Verfügung gestellt und können von dort aus an ein angeschlossenes Rundfunkempfangsgerät weitergeleitet werden.

Liegt dem Endverbraucher die Berechtigung vor, die im Frequenzbereich von 48 MHz bis 480 MHz liegenden, frei zugänglichen Rundfunksignale und die im Frequenzbereich von 480 MHz bis 720 MHz liegenden Rundfunksignale zu empfangen, dann erzeugt die Steuereinheit 5 die Steuersignale für die Schalter 7, 9 und 11 derart, daß die Schalter 7 und 9 geschlossen sind und der Schalter 11 geöffnet ist. Folglich werden die Filter 6 und 8 aktiviert, so daß am Ausgang 12 bzw. 13 der Antennendose alle zwischen 48 MHz und 720 MHz übertragenen Signale abgreifbar sind.

Hat der Endverbraucher die Berechtigung, die im Frequenzbereich von 48 MHz bis 480 MHz liegenden, frei zugänglichen Rundfunksignale und die im Frequenzbereich von 720 MHz bis 860 MHz liegenden Rundfunksignale zu empfangen, dann erzeugt die Steuereinheit 5 die Steuersignale für die Schalter 7, 9 und 11 derart, daß die Schalter 7 und 11 geschlossen sind und der Schalter 9 geöffnet ist. Folglich sind die Filter 6 und 10 aktiviert, so daß am Ausgang 12 bzw. 13 der Antennendose alle zwischen 48 MHz und 480 MHz und alle zwischen 720 MHz und 860 MHz übertragenen Signale abgreifbar sind.

Vorzugsweise wird von einem der Kopfstation 4 zugeordneten Rechner permanent oder in vorgegebenen Zeitabständen ein an die Antennendose gerichtetes Abfragesignal ausgesandt. Aufgrund dieser Anfrage liest die Steuereinheit 5 das im Speicher 5a abgespeicherte Kennsignal für die Antennendose aus und sendet ein dieses Kennsignal enthaltendes Antwortsignal an die Kopfstation 4 aus. Diese erkennt beim Vorliegen des Antwortsignals, daß die zugehörige Antennendose nach wie vor vorhanden ist und ordnungsgemäß arbeitet. Bleibt hingegen das genannte Antwortsignal aus, dann erkennt der der Kopfstation 4 zugeordnete Rechner, daß eine Störung vorliegt, und initiiert die Ausgabe eines zugehörigen Meldesignals. Aufgrund dieses Meldesignals kann der Betreiber der Kopfstation geeignete Gegenmaßnahmen in die Wege leiten.

Das Ausbleiben des Antwortsignals kann beispielsweise darauf zurückzuführen sein, daß ein Endverbraucher, der keine Berechtigung hat, die in den Frequenzbereichen von 480 MHz bis 720 MHz und 720 MHz bis 860 MHz übertragenen Signale zu empfangen, die Antennendose entfernt und durch eine für alle Signale durchlässige Schaltung oder ein alle Signale weiterleitendes Kabel ersetzt hat. Auf ein derartiges Vorgehen kann nach dem Erkennen einer unterbliebenen Rücksendung des Antwortsignals schnell reagiert werden.

Gemäß einer alternativen Ausführungsform der Erfindung erfolgt die Steuerung der Schalter 7, 9 und 11 manuell durch vom Betreiber der Kopfstation eingesetztes Personal. In diesem Falle ist die Antennendose vorzugsweise verplombt oder anderweitig verschlossen, so daß die Schalter vom Endkunden nicht unzulässigerweise verstellt werden können.

Gemäß einer weiteren alternativen Ausführungsform der Erfindung entspricht die Durchlaßbandbreite der parallel zueinander angeordneten Filter jeweils der Bandbreite eines Übertragungskanals, so daß jeder Übertragungskanal selektiv zu- und abschaltbar ist.

Die Stromversorgung der Antennendose bzw. der darin befindlichen Bauteile erfolgt in vorteilhafter Weise über das Antennenkabel, so daß gesonderte Stromquellen nicht notwendig sind.

## Patentansprüche

1. Antennendose, welche einen Eingang für über ein Antennenkabel in einer Vielzahl von unterschiedlichen Frequenzkanälen übertragene Rundfunksignale aufweist,
**dadurch gekennzeichnet, daß**
sie mehrere parallel zueinander angeordnete Filter (6, 8, 10) aufweist, welche unterschiedliche Durchlaßbereiche haben und selektiv zu- und abschaltbar sind, und die Ausgänge der Filter mit einem gemeinsamen Ausgangsanschluß (12, 13) der Antennendose (1) verbunden sind.

2. Antennendose nach Anspruch 1,
**dadurch gekennzeichnet, daß**
den zueinander parallel angeordneten Filtern (6, 8, 10) jeweils ein steuerbarer Schalter (7, 9,11) in Reihe geschaltet ist.

3. Antennendose nach Anspruch 2,
**dadurch gekennzeichnet, daß**
sie eine Steuereinheit (5) aufweist, die zur Generierung von Steuersignalen für die steuerbaren Schalter (7, 9, 11) vorgesehen ist und/oder die Steuereinheit (5 ) Mittel zur Auswertung von über das Antennenkabel (3) übertragenen Steuerdaten aufweist und die Steuersignale in Abhängigkeit von den ausgewerteten Steuerdaten erzeugt.

4. Antennendose nach Anspruch 4,
**dadurch gekennzeichnet, daß**
die Steuerdaten über das Antennenkabel (3) in einem eigenen, von den Frequenzkanälen der Rundfunksignale verschiedenen Frequenzbereich übertragen werden und/oder die Rundfunksignale in einem Frequenzbereich zwischen 48 MHz und 860 MHz und die Steuerdaten unterhalb von 48 MHz übertragen werden.

5. Antennendose nach einem der Ansprüche 4 oder 5,
**dadurch gekennzeichnet, daß**
die Steuerdaten in einer Kabelkopfstation (4) generiert werden.

6. Antennendose nach einem der vorhergehenden Ansprüche,
**dadurch gekennzeichnet, daß**
sie einen Speicher (5a) aufweist, in welchem ein der Antennendose (1) individuell zugeordnetes Kennsignal abgespeichert ist und/oder das Antennenkabel (3) zu einer bidirektionalen Signalübertragung dient und die Steuereinheit (5) eine Übertragung des Kennsignals zur Kabelkopfstation (4) steuert.

7. Antennendose nach einem der vorhergehenden Ansprüche,
**dadurch gekennzeichnet, daß**
die Stromversorgung der Antennendose über das Antennenkabel (3) erfolgt.

8. Antennendose nach Anspruch 2,
**dadurch gekennzeichnet, daß**
die steuerbaren Schalter (7, 9,11) manuell steuerbar sind.

9. Antennendose nach einem der vorhergehenden Ansprüche,
**dadurch gekennzeichnet, daß**
der gemeinsame Ausgangsanschluß ein Fernsehsignal- (12) und/oder ein Tonrundfunksignal-Ausgangsanschluß (13) ist.

10. Antennendose nach einem der vorhergehenden Ansprüche,
**dadurch gekennzeichnet, daß**
der Durchlaßbereich eines Filters der Bandbreite eines Frequenzkanals entspricht oder der Durchlaßbereich eines Filters der Bandbreite mehrerer Frequenzkanäle entspricht.

11. Antennendose nach einem der vorhergehenden Ansprüche,
**dadurch gekennzeichnet, daß**
die übertragenen Rundfunksignale analoge und/oder digitale Rundfunksignale sind.
